# EUROPÄISCHE PATENTANMELDUNG

(11) **EP 4 796 247 A1**
(43) Veröffentlichungstag der Anmeldung: **26.08.2026**
(21) Anmeldenummer: 26158959.2
(22) Anmeldetag: 17.02.2026
(51) Int. Cl.: B23B 31/20

(54) **WERKZEUGHALTER MIT NUTENRING**

(30) Priorität: 19.02.2025 DE 102025106200
(71) Anmelder: Albrecht Präzision GmbH & Co. KG, 73249 Wernau (DE)
(72) Erfinder: Ammersdörfer, Joel, 73061 Ebersbach (DE); Schmideder, Martin, 70771 Leinfelden-Echterdingen (DE)
(74) Vertreter: Rüger Abel IP Legal Solutions GmbH

(57) **Zusammenfassung**

Die Erfindung betrifft einen Werkzeughalter (10) zum Spannen eines Werkzeugs (11) unter Verwendung einer Spannzange (62). Der Werkzeughalter (10) hat einen Grundkörper (12), aufweisend einen Maschinenverbindungsteil (14), der eine Schnittstelle zu einer Spindelaufnahme einer Maschinenspindel darstellt. Im Grundkörper (12) ist ein Aufnahmeraum (15) vorhanden, in dem ein Spannrotor (29) angeordnet ist. Der Spannrotor (29) ist zwischen einer ersten Axiallagerfläche (22) des Grundkörpers (12) und einer an einem Lagerring (43) vorhandenen zweiten Axiallagerfläche (46) in Axialrichtung parallel zu einer Mittelachse (A) des Grundkörpers (12) abgestützt. Der Lagerring (43) ist im Aufnahmeraum (15) mittels eines in eine Sicherungsnut (23) eingesetzten Nutenrings (53) gehalten. Der Lagerring (43) hat eine Ringaußenfläche (44) zur Anlage am Grundkörper (12) und eine Ringinnenfläche (45) zur Anlage am Spannrotor (29). Mittels des Lagerrings (43) kann der Spannrotor (29) in Radialrichtung sehr genau relativ zum Grundkörper (12) und damit sehr genau koaxial zur Mittelachse (A) des Grundkörpers (12) positioniert werden. Der Lagerring (43) ist insbesondere gewindelos und auch gewindelos am Grundkörper (12) gesichert.

## Beschreibung

Die Erfindung betrifft einen Werkzeughalter, der dazu eingerichtet ist, ein Werkzeug einzuspannen. Der Werkzeughalter und das darin eingespannte Werkzeug sind im Betrieb vorzugsweise rotierend um eine Mittelachse des Werkzeughalters, die im Idealfall auch die Mittelachse des Werkzeugs darstellt, rotierend antreibbar. Das Werkzeug kann ein spanabhebendes Werkzeug sein, wie beispielsweise ein Fräser oder ein Bohrer.

Ein Werkzeughalter dieses Typs ist beispielsweise aus DE 10 2018 111 044 A1 bekannt. Der Werkzeughalter hat einen Grundkörper mit einem Maschinenverbindungsteil, der eine Schnittstelle zu einer Maschinenspindelaufnahme einer Maschinenspindel darstellt. Im Grundkörper ist ein Aufnahmeraum vorhanden. In dem Aufnahmeraum kann ein Spannrotor eingesetzt und mittels eines rohrähnlichen Lagersitzelements gesichert werden. Das Lagersitzelement ist mit einem Außengewinde in ein Innengewinde des Grundkörpers eingeschraubt. Es befindet sich im Aufnahmeraum. Eine Spannzange kann mit Hilfe des Spannrotors in den Aufnahmeraum eingezogen werden. Mittels der Spannzange kann das zu spannende Werkzeug radial zur Mittelachse klemmend beaufschlagt und gehalten werden.

Diese Lösung hat sich in der Praxis bewährt und bietet eine hohe Spannsicherheit. Es gestattet auch bei der Verwendung des Werkzeugs hohe Vorschubgeschwindigkeiten und hohe Abtragsraten.

Aufgabe der vorliegenden Erfindung ist es, den bekannten Werkzeughalter weiter zu optimieren, insbesondere die axiale Baulänge des Werkzeughalters zu reduzieren und die Positioniergenauigkeit des zu spannenden Werkzeugs in Radialrichtung radial zur Mittelachse des Werkzeughalters zu verbessern.

Diese Aufgabe wird durch einen Werkzeughalter mit den Merkmalen des Patentanspruches 1 gelöst.

Der Werkzeughalter gemäß der vorliegenden Erfindung ist zum Spannen eines Werkzeugs eingerichtet. Bei aufgenommenem, gespanntem Werkzeug kann der Werkzeughalter mittels einer Maschinenspindel einer Maschine (zum Beispiel Werkzeugmaschine) bewegt, positioniert und insbesondere auch rotierend um eine Spindelachse der Maschinenspindel angetrieben werden. Das Werkzeug ist insbesondere ein spanabhebend arbeitendes Werkzeug, wie zum Beispiel ein Fräser oder ein Bohrer.

Der Werkzeughalter hat einen Grundkörper. Am Grundkörper ist ein Maschinenverbindungsteil vorhanden, der zum lösbaren Anordnen des Werkzeughalters in der Maschinenspindel beziehungsweise einer Maschinenspindelaufnahme eingerichtet ist. Der Maschinenverbindungsteil kann eine standardisierte Schnittstelle bilden, beispielsweise einen Hohlschaftkegel (HSK) oder einen Steilschaftkegel (SK) oder eine andere insbesondere standardisierte Ausgestaltung. Der Maschinenverbindungsteil ist sozusagen die Schnittstelle zwischen dem Werkzeughalter und der Maschinenspindelaufnahme der Maschine.

Der Grundkörper definiert eine Mittelachse, wobei sich der Maschinenverbindungsteil möglichst genau koaxial zur Mittelachse erstreckt. Dadurch kann die Mittelachse des Werkzeughalters in Übereinstimmung gebracht werden mit der Spindelachse der Maschinenspindel, wenn der Werkzeughalter an der Maschinenspindel angeordnet ist. Die Drehung der Maschinenspindel um die Spindelachse führt somit zu einer Drehung des Werkzeughalters sowie eines darin gehaltenen Werkzeugs um die Mittelachse.

Solange nichts anderes explizit angegeben ist wird in der vorliegenden Beschreibung die Richtungsangaben wie folgt verwendet: Als Axialrichtung wird eine Richtung parallel zur Mittelachse verstanden. Eine Radialrichtung ist radial zur Mittelachse ausgerichtet. Eine Umfangsrichtung beschreibt die Richtung auf einer Kreisbahn um die Mittelachse.

Der Grundkörper hat einen Aufnahmeraum. Der Aufnahmeraum ist zu einer vom Maschinenverbindungsteil abgewandten Vorderseite durch eine Zugangsöffnung zugänglich. Die Zugangsöffnung ist an einer Stirnseite des Grundkörpers angeordnet. An den Aufnahmeraum grenzt eine erste Axiallagerfläche des Grundkörpers an. Die erste Axiallagerfläche ist der Zugangsöffnung zugewandt und mit Abstand zur Zugangsöffnung angeordnet. Die erste Axiallagerfläche kann sich in einer Ebene erstrecken, die rechtwinklig zur Mittelachse ausgerichtet ist. Die erste Axiallagerfläche kann in Umfangsrichtung ringförmig vollständig geschlossen sein.

Benachbart zur Zugangsöffnung hat der Grundkörper eine Sicherungsnut. Die Sicherungsnut kann in Umfangsrichtung vollständig geschlossen ausgebildet sein. Die Sicherungsnut kann alternativ in Umfangsrichtung einen nicht geschlossenen, kreisbogenförmigen Verlauf haben. Die Sicherungsnut ist im Querschnitt betrachtet beispielsweise rechteckförmig. Die Sicherungsnut ist zum Aufnahmeraum hin offen. über die Zugangsöffnung und den Aufnahmeraum kann ein Nutenring in die Sicherungsnut eingesetzt werden.

An den Aufnahmeraum angrenzend hat der Grundkörper eine Umfangsinnenfläche, die in Axialrichtung zwischen der Sicherungsnut und der ersten Axiallagerfläche angeordnet ist. Die Umfangsinnenfläche ist insbesondere eine möglichst genau koaxial zur Mittelachse angeordnete, vorzugsweise zylindrische Fläche. Die Umfangsinnenfläche kann sich in Axialrichtung unmittelbar an die Sicherungsnut anschließen und ist vorzugsweise mit Abstand zur ersten Axiallagerfläche angeordnet. Die Umfangsinnenfläche ist bevorzugt eine in Axialrichtung und/oder in Umfangsrichtung ebene Fläche.

Der Werkzeughalter hat einen im Aufnahmeraum angeordneten Spannrotor. Der Spannrotor kann zum Spannen eines Werkzeugs mit einer am Grundkörper vorhandenen Bedieneinrichtung, beispielsweise einer Drehvorrichtung, relativ zum Grundkörper um die Mittelachse gedreht werden. Ohne Betätigung der Bedien- oder Drehvorrichtung wird der Spannrotor dabei in seiner aktuellen Drehlage relativ zum Grundkörper gehalten bzw. fixiert, so dass eine unbeabsichtigte Relativdrehung des Spannrotors gegenüber dem Grundkörper bei der Verwendung des Werkzeughalters in einer Maschinenspindel vermieden ist. Die Kopplung zwischen der Bedien- oder Drehvorrichtung und dem Spannrotor kann dabei mittels eines Getriebes hergestellt sein, das eine ausreichende Hemmung gegen ein unbeabsichtigtes Lösebewegung des Spannrotors relativ zum Grundkörper aufweist (zum Beispiel Schneckengetriebe oder Spindelgetriebe).

Der Spannrotor hat ein Spanngewinde. Das Spanngewinde ist dazu eingerichtet, mit einem Spannzangengewinde einer Spannzange zusammenzuarbeiten. Spanngewinde ist insbesondere ein Innengewinde. Durch eine Drehung des Spannrotors um die Mittelachse relativ zum Grundkörper (zum Beispiel mit der Drehvorrichtung) kann eine Gewindeverbindung zwischen dem Spanngewinde und dem Spannzangengewinde hergestellt oder gelöst werden.

Der Spannrotor hat außerdem einen Rohrabschnitt. Der Rohrabschnitt ist insbesondere in Axialrichtung mit Abstand zum Spanngewinde angeordnet. Der Rohrabschnitt hat eine von der Mittelachse abgewandte Rohraußenfläche.

Der Werkzeugspanner hat außerdem einen Lagerring, der lösbar am Grundkörper angeordnet werden kann. Der Lagerring hat eine der Mittelachse zugewandte Ringinnenfläche und eine von der Mittelachse und der Ringinnenfläche abgewandte Ringaußenfläche. Die Ringinnenfläche und die Ringaußenfläche sind bevorzugt koaxial zur Mittelachse und vorzugsweise koaxial zueinander angeordnet. Die Ringaußenfläche und die Ringinnenfläche sind beim bevorzugten Ausführungsbeispiel in Axialrichtung und/oder in Umfangsrichtung ebene Flächen.

Eine exakt koaxiale Anordnung ohne Abweichung ist technisch nicht vollständig erreichbar. Insbesondere können koaxiale Anordnungen relativ zur Mittelachse Abweichungen von maximal 10 µm oder vorzugweise maximal 7,0 µm oder weiter vorzugsweise maximal 5,0 µm aufweisen und noch eine ausreichend genaue Spannung eines Werkzeugs ermöglichen.

Am Lagerring ist außerdem eine zweite Axiallagerfläche vorhanden, die der ersten Axiallagerfläche zugewandt und somit von der Zugangsöffnung abgewandt ist. Die zweite Axiallagerfläche erstreckt sich vorzugsweise in einer Ebene rechtwinklig zur Mittelachse. Die zweite Axiallagerfläche kann eine Verbindungsfläche zwischen der Ringinnenfläche und der Ringaußenfläche oder zumindest ein Abschnitt hiervon sein. Die zweite Axiallagerfläche ist in Umfangsrichtung vorzugsweise ringförmig vollständig geschlossen.

Der Spannrotor ist in Axialrichtung mittelbar oder unmittelbar an der ersten Axiallagerfläche und der zweiten Axiallagerfläche abgestützt und somit in Axialrichtung gegen eine unerwünschte Relativbewegung gegenüber dem Grundkörper gesichert.

Der Lagerring ist insbesondere gewindelos. Der Lagerring stützt sich in Axialrichtung einerseits mittelbar oder unmittelbar am Spannrotor und andererseits am Nutenring ab, der in die Sicherungsnut eingesetzt ist.

Mittels des Lagerrings und des Nutenrings lässt sich in Axialrichtung ein sehr kompakter Aufbau des Werkzeughalters erreichen.

Die Ringinnenfläche kann eine zweidimensionale, flächige Anlage mit der Rohraußenfläche des Rohrabschnitts des Spannrotors bilden, während die Ringaußenfläche eine zweidimensionale, flächige Anlage mit der Umfangsinnenfläche des Grundkörpers bildet. Der Lagerring kann dadurch in Radialrichtung sehr genau positioniert werden, was wiederum dazu führt, dass der Rohrabschnitt des Spannrotors in Radialrichtung gegenüber der Mittelachse sehr genau angeordnet ist. Im Vergleich zu einem eingeschraubten Lagerelement kann eine hohe Positioniergenauigkeit in Radialrichtung des Spannrotors und damit eines zu spannenden Werkzeugs erreicht werden.

Bei der Herstellung einer Gewindeverbindung kann sich in Radialrichtung eine Relativposition zwischen den verbundenen Teilen durch die ineinandergreifenden Gewinde ergeben, wobei die Relativausrichtung stark von der Genauigkeit bei der Gewindeherstellung abhängt. Eine hochgenaue Gewindefertigung ist aufwendig. Demgegenüber bietet der Lagerring die Möglichkeit, in Umfangsrichtung und in Axialrichtung betrachtet ebene Flächen (Ringinnenfläche und Ringaußenfläche) bereitzustellen, die jeweils mit einer zugeordneten in Umfangsrichtung und in Axialrichtung ebenfalls ebenen Fläche (insbesondere Umfangsinnenfläche am Rohrkörper bzw. Rohraußenfläche am Rohrabschnitt) eine Passung mit geringem Spiel und damit mit sehr hoher Positioniergenauigkeit erlauben. Über den Rohrabschnitt kann eine eingesetzte bzw. eingeschraubte Spannzange daher in Radialrichtung sehr genau ausgerichtet und positioniert werden. Diese Positioniergenauigkeit erfordert keine hochgenaue Fertigung des Spanngewindes und des Spannzangengewindes.

Es ist bevorzugt, wenn die Umfangsinnenfläche und die Ringaußenfläche ein erstes Passflächenpaar und die Ringinnenfläche und die Rohraußenfläche ein zweites Passflächenpaar bilden, wobei die Passflächenpaare jeweils als Passung mit geringem Spiel oder als spielfreie Passung ausgebildet sind. Die Passflächen der beiden Passflächenpaare sind gewindelos und vorzugsweise ebene Flächen in Umfangsrichtung und in Axialrichtung betrachtet.

Wie erläutert, kann am Grundkörper eine Drehvorrichtung vorhanden sein, die beispielsweise eine von außen zugänglichen Werkzeugschnittstelle oder ein anderes geeignetes Bedienelement aufweist. Über die Werkzeugschnittstelle kann die Drehvorrichtung betätigt werden, so dass die Drehvorrichtung auch als Bedieneinrichtung bezeichnet werden kann. Die Drehvorrichtung hat eine Kopplungseinrichtung (z.B. ein Getriebe), die mit dem Spannrotor gekoppelt ist. Die Kopplungseinrichtung ist insbesondere selbsthemmend ausgebildet. Bei einer Betätigung der Werkzeugschnittstelle dreht sich der Spannrotor um die Mittelachse relativ zum Grundkörper. Diese Relativdrehposition zwischen dem Spannrotor und dem Grundkörper bleibt aufrechterhalten, wenn die Werkzeugschnittstelle und somit die Drehvorrichtung unbetätigt ist, also insbesondere auch dann, wenn der Werkzeughalter mit dem eingespannten Werkzeug verwendet wird (z.B. in dem einsatzbereiten in die Maschinenspindel eingesetzt Zustand ist).

Bei einer bevorzugten Ausführungsform hat der Werkzeughalter eine Axiallageranordnung. Die Axiallageranordnung ist dazu eingerichtet, den Spannrotor in Axialrichtung an der ersten Axiallagerfläche und/oder der zweiten Axiallagerfläche abzustützen. Bei einer bevorzugten Ausführungsform weist die Axiallageranordnung ein Wälzlager auf, das zwischen der ersten Axiallagerfläche und dem Spannrotor angeordnet ist, so dass sich der Spannrotor über das Wälzlager mittelbar an der ersten Axiallagerfläche abstützen kann. Alternativ oder zusätzlich kann zwischen der ersten Axiallagerfläche und/oder der zweiten Axiallagerfläche einerseits und dem Spannrotor andererseits ein Stützring der Axiallageranordnung vorhanden sein.

Der wenigstens eine Stützring kann unmittelbar am Spannrotor anliegen. Über den wenigstens einen Stützring kann der Kontakt des Spannrotors zum Wälzlager einerseits und zur zweiten Axiallagerfläche andererseits verbessert und insbesondere die Kontaktfläche in Radialrichtung vergrößert werden.

Am Grundkörper kann angrenzend an den Aufnahmeraum eine Ringstützfläche vorhanden sein. Die Ringstützfläche kann um die Mittelachse, beispielsweise möglichst koaxial zur Mittelachse, angeordnet und in Umfangsrichtung ringförmig geschlossen sein. Die Ringstützfläche ist der Zugangsöffnung zugewandt und erstreckt sich vorzugsweise in einer Ebene, die rechtwinklig zur Mittelachse ausgerichtet ist.

Die Ringstützfläche kann benachbart zur Umfangsinnenfläche des Grundkörpers angeordnet sein. Die Umfangsinnenfläche befindet sich dabei zwischen der Ringstützfläche und der Sicherungsnut. An der Ringstützfläche kann sich der Lagerring in Axialrichtung abstützen.

Die Ringstützfläche hat bei einem bevorzugten Ausführungsbeispiel einen Innendurchmesser, der mindestens so groß ist wie der Außendurchmesser der ersten Axiallagerfläche. Bevorzugt ist der Innendurchmesser der Sicherungsnut mindestens so groß wie der Außendurchmesser der Ringstützfläche.

Der Werkzeughalter hat vorzugsweise ein Vorderteil mit einem Spannkanal. Der Spannkanal wird durch eine konische Innenspannfläche des Vorderteils begrenzt. Die Innenspannfläche umschließt die Mittelachse in Umfangsrichtung vollständig. Beim Einspannen der Spannzange in den Spannrotor drängt die Innenspannfläche am Spannkanal des Vorderteils die Spannzange radial nach innen, um ein dort angeordnetes Werkzeug klemmend zu beaufschlagen und in der Spannzange zu fixieren.

Das Vorderteil kann beispielsweise über eine Gewindeverbindung oder eine andere geeignete Verbindung lösbar am Grundkörper angeordnet sein. Der Spannkanal ist bei hergestellter Verbindung des Vorderteils am Grundkörper benachbart zur Zugangsöffnung angeordnet. Der Vorderteil ist insbesondere nicht dazu eingerichtet, den Spannrotor, den Lagerring oder irgendeine andere im Aufnahmeraum des Grundkörpers angeordnete Komponente des Werkzeughalters zu sichern oder in Axialrichtung abzustützen.

Das Vorderteil kann derart am Grundkörper angeordnet werden, dass die Relativlage in Radialrichtung zwischen der Spannzange mit dem zu spannenden Werkzeug und dem Grundkörper hauptsächlich oder ausschließlich durch den Lagerring und den Spannrotor und insbesondere den Rohrabschnitt des Spannrotors definiert ist. Beispielsweise kann das Vorderteil hierzu geringfügig in Radialrichtung relativ zum Grundkörper bewegbar sein, beispielsweise indem die Verbindung zwischen dem Vorderteil und dem Grundkörper ein entsprechendes Spiel in Radialrichtung bereitstellt.

Vorteilhafte Ausgestaltungen der Erfindung ergeben sich aus den abhängigen Patentansprüchen, der Beschreibung und der Zeichnung. Nachfolgend werden bevorzugte Ausführungsbeispiele der Erfindung anhand der beigefügten Zeichnung im Einzelnen erläutert. In der Zeichnung zeigen:
Figur 1 eine Seitenansicht eines Ausführungsbeispiels eines Werkzeughalters,
Figur 2 der Werkzeughalter aus Figur 1 in einer perspektivischen Explosionsdarstellung,
Figur 3 der Werkzeughalter gemäß Figuren 1 und 2 in einer teilweise geschnittenen Seitenansicht in Explosionsdarstellung,
Figur 4 der Werkzeughalter gemäß der Figuren 1 bis 3 in einem Längsschnitt entlang einer Mittelachse des Werkzeughalters,
Figur 5 eine Teildarstellung des vorderen Bereichs des Werkzeughalters gemäß der Figuren 1 bis 4 in einem Längsschnitt entlang der Mittelachse,
Figur 6 eine stark schematisierte Prinzipdarstellung zur Erläuterung des Aufbaus und der Funktionsweise des Werkzeughalters gemäß der Figuren 1 bis 5 und
Figuren 7 und 8 ein abgewandeltes Ausführungsbeispiel eines Lagerrings für einen Werkzeughalter gemäß der Figuren 1 bis 6.

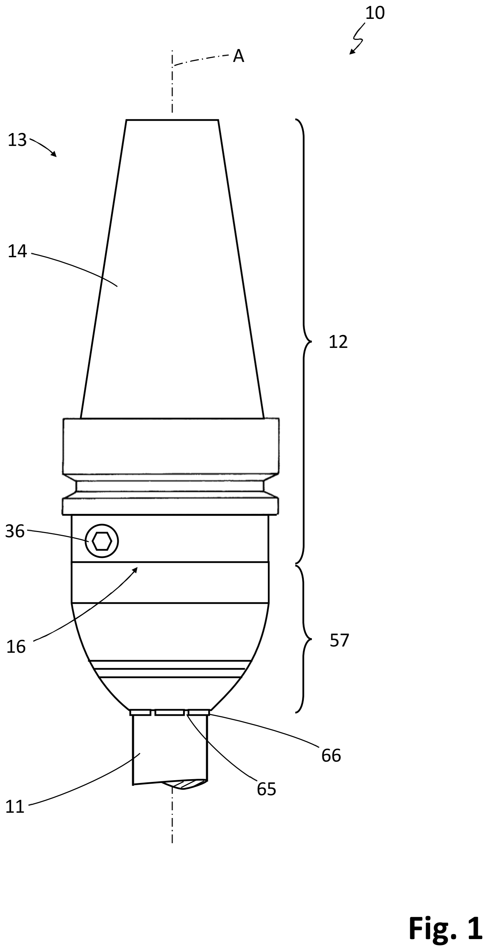

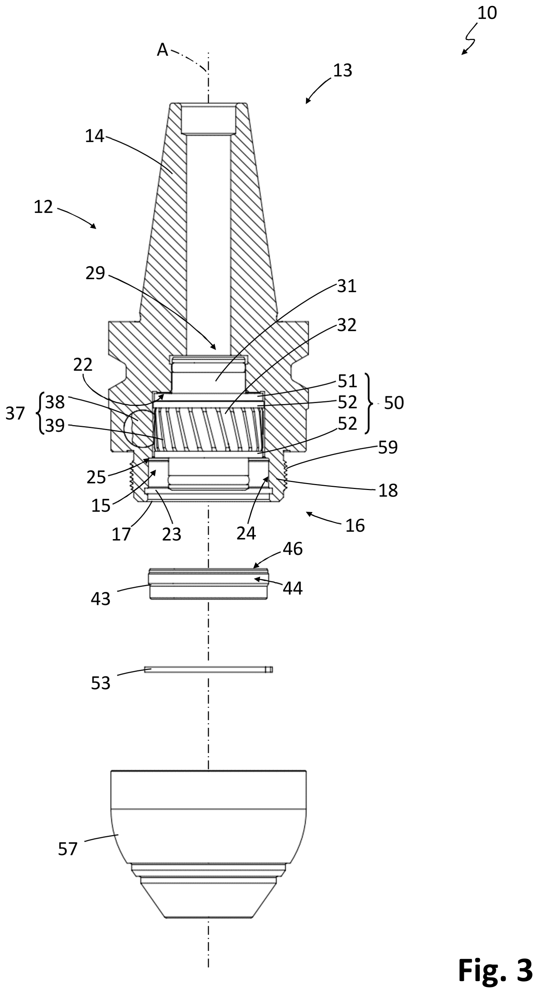

In den Figuren 1 bis 4 ist ein Ausführungsbeispiel eines Werkzeughalters 10 in unterschiedlichen Darstellungen gezeigt. Der Werkzeughalter 10 ist dazu eingerichtet, ein Werkzeug 11 einzuspannen. In einsatzbereitem Zustand wird das Werkzeug 11 kraftschlüssig in einer Radialrichtung radial zu einer Mittelachse A klemmend beaufschlagt.

Auch für die nachfolgende Beschreibung der in den Figuren dargestellten Ausführungsbeispiele gilt: Eine Richtung, die parallel zur Mittelachse A ausgerichtet ist, wird als Axialrichtung bezeichnet. Eine Radialrichtung ist radial zur Mittelachse A ausgerichtet. Eine Umfangsrichtung beschreibt die Richtung auf einer Kreisbahn um die Mittelachse.

Der Werkzeughalter 10 hat einen Grundkörper 12. Der Grundkörper 12 hat an einer Rückseite 13 einen Maschinenverbindungsteil 14. Der Maschinenverbindungsteil 14 stellt eine Schnittstelle des Werkzeughalters 10 dar, um diesen in eine Spindelaufnahme einer Maschinenspindel anordnen zu können und gemeinsam mit der Maschinenspindel drehend antreiben zu können. Der Maschinenverbindungsteil 14, eine Form, die einer standardisierten Schnittstelle zu einer Maschinenspindel entspricht, beispielsweise in Form eines Werkzeugkegels, der hier beispielhaft als Steilschaftkegel (SK) veranschaulicht ist. Alternativ könnte anstelle eines Steilschaftkegels auch ein Hohlschaftkegel (HSK) oder eine andere standardisierte Schnittstelle als Maschinenverbindungsteil 14 verwendet werden.

Im Grundkörper 12 ist ein Aufnahmeraum 15 vorhanden. Der Aufnahmeraum 15 kann eine zumindest abschnittsweise zylindrische und/oder konische Form aufweisen, bei unterschiedliche Durchmesser eine gestufte Form der Ausnehmung 15 ergeben können, wie es beim vorliegenden Ausführungsbeispiel der Fall ist. Der Aufnahmeraum 15 ist an einer der Rückseite 13 des Grundkörpers 12 entgegengesetzten Vorderseite 16 mittels einer Zugangsöffnung 17 von außen zugänglich. Die Zugangsöffnung 17 ist beim Ausführungsbeispiel kreisrund und durch einen Ringteil 18 des Grundkörpers 15 in einer Umfangsrichtung um die Mittelachse A umschlossen. Der Ringteil 18 ist hohlzylindrisch und beispielsgemäß möglichst koaxial zur Mittelachse A angeordnet.

In Axialrichtung mit Abstand zur Zugangsöffnung 17 weist der Grundkörper 12 eine an den Aufnahmeraum 15 angrenzende erste Axiallagerfläche 22 auf. Beim Ausführungsbeispiel erstreckt sich die erste Axiallagerfläche in einer Ebene, die rechtwinklig zur Mittelachse A ausgerichtet ist. Die erste Axiallagerfläche 22 ist der Zugangsöffnung 17 zugewandt. Beim Ausführungsbeispiel ist die erste Axiallagerfläche 22 als Kreisringfläche ausgebildet und sowohl in Radialrichtung betrachtet als auch in Umfangsrichtung betrachtet eben. Ein Durchmesser D1 der Zugangsöffnung 17 ist mindestens so groß oder größer wie ein Außendurchmesser D2 der ersten Axiallagerfläche 22.

Benachbart zur Zugangsöffnung weist der Grundkörper 12 eine Sicherungsnut 23 auf. Die Sicherungsnut 23 ist beispielsgemäß als Ringnut ausgebildet und umschließt die Mittelachse A in Umfangsrichtung vollständig. Vorzugsweise ist die Sicherungsnut 23 möglichst genau koaxial zur Mittelachse A angeordnet. Die Sicherungsnut 23 ist in Radialrichtung, also zur Mittelachse A und zum Aufnahmeraum 15 hin offen. Ein Nutenquerschnitt der Sicherungsnut 23 kann rechteckig oder quadratisch sein. Die Sicherungsnut 23 ist beispielsgemäß im Rohrteil 18 des Grundkörpers 12 angeordnet.

Zwischen der ersten Axiallagerfläche 22 und der Sicherungsnut 23 ist am Grundkörper 12 eine an den Aufnahmeraum 15 angrenzende Umfangsinnenfläche 24 vorhanden. Die Umfangsinnenfläche 24 ist möglichst genau koaxial zur Mittelachse A angeordnet und kann vorzugsweise als Zylinderfläche ausgeführt sein. Die Umfangsinnenfläche 24 ist beispielsgemäß eine in Axialrichtung und in Umfangsrichtung ebene Fläche. Die Umfangsinnenfläche 24 kann sich an die Sicherungsnut 23 unmittelbar anschließen oder mit Abstand dazu angeordnet sein. Beim Ausführungsbeispiel ist die Umfangsinnenfläche 24 am Rohrteil 18 des Grundkörpers 12 angeordnet.

Zwischen der Umfangsinnenfläche 24 und der ersten Axiallagerfläche 22 hat der Rohrkörper 12 eine Ringstützfläche 25. Die Ringstützfläche 25 ist der Zugangsöffnung 17 zugewandt und erstreckt sich beispielsgemäß in einer Ebene, die rechtwinklig zur Mittelachse A ausgerichtet ist. Die Ringstützfläche kann sich unmittelbar an die Umfangsinnenfläche 24 anschließen. Beim Ausführungsbeispiel ist die Ringstützfläche 25 im Rohrteil 18 des Grundkörpers 12 angeordnet.

Beim Ausführungsbeispiel entspricht der Durchmesser der Umfangsinnenfläche 24 dem Durchmesser D1 der Zugangsöffnung 17. Ein Außendurchmesser der Ringstützfläche 25 kann dem Durchmesser der Ringstützfläche 24 entsprechen oder auch kleiner sein. Ein Innendurchmesser D3 der Ringstützfläche 25 ist kleiner als der Durchmesser der Umfangsinnenfläche 24 und beispielsweise auch kleiner als der Durchmesser D1 der Zugangsöffnung 17. Ein Außendurchmesser der Ringstützfläche 25 kann dem Durchmesser der Ringstützfläche 24 entsprechen oder auch kleiner sein. Ein Innendurchmesser D3 der Ringstützfläche 25 ist kleiner als der Durchmesser der Umfangsinnenfläche 24 und beispielsgemäß auch kleiner als der Durchmesser D1 der Zugangsöffnung 17.

Der Aufnahmeraum 15 ist dazu eingerichtet, einen Spannrotor 29 im Aufnahmeraum 15 des Grundkörpers 12 anzuordnen. Der Spannrotor 29 hat ein Spanngewinde 30. Das Spanngewinde 30 ist als Innengewinde ausgebildet und kann in einem rohrförmigen Endstück 31 des Spannkörpers angeordnet sein. An das rohrförmige Endstück 31 schließt sich ein zentraler Teil 32 des Spannrotors 29 an. Auf der dem Endstück 31 entgegengesetzten Seite des zentralen Teils 32 hat der Spannkörper 29 einen Rohrabschnitt 33 mit einer Rohraußenfläche 34. Die Rohraußenfläche 34 ist beim Ausführungsbeispiel eine Zylinderfläche und erstreckt sich somit in Axialrichtung und in Umfangsrichtung eben. Die Rohraußenfläche 34 ist möglichst genau koaxial zur Mittelachse A angeordnet.

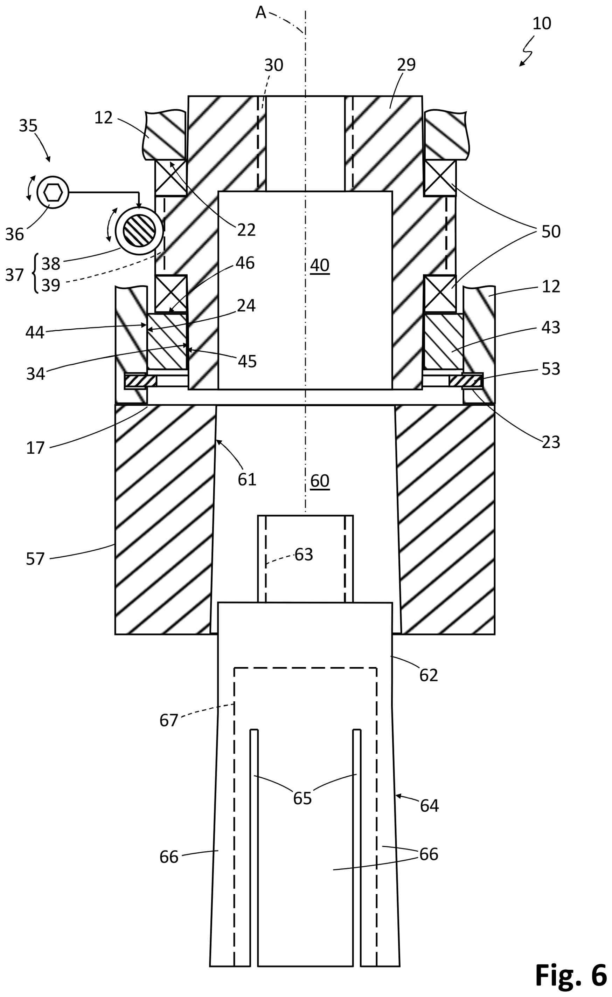

Mittels einer Drehvorrichtung 35 (siehe insbesondere Figur 6) kann der Spannrotor 29 relativ zum Grundkörper 12 um die Mittelachse A gedreht werden. Die Drehvorrichtung 35 kann auch als Bedieneinrichtung bezeichnet werden, mittels der der Spannrotor 29 betätigt bzw. relativ zum Grundkörper 12 gedreht werden kann. Die Drehvorrichtung 35 hat hierzu ein am Grundkörper 12 angeordnetes, von außen zugängliches Bedienelement 36. Bedienelement 36 kann eine standardisierte Schnittstelle aufweisen, um das Bedienelement 36 mit einem Werkzeug betätigen und beispielsweise drehen zu können. Das Bedienelement 36 kann demnach eine Werkzeugschnittstelle für ein Standardwerkzeug aufweisen, beispielsweise einen Schraubenschlüssel, einen Schraubendreher, einen Sechskantschlüssel, einen Sechsrundschlüssel, etc. Zum Beispiel kann das Bedienelement 36 einen Innensechskant, Außensechskant, einen Innensechsrund oder eine andere bekannte standardisierte Werkzeugschnittstelle aufweisen.

Die Drehvorrichtung 35 hat außerdem eine Kopplungseinrichtung 37 und insbesondere ein Kopplungsgetriebe, um das Bedienelement 36 mit dem Spannrotor 29 und beispielsgemäß dem zentralen Teil 32 zu koppeln. Die Kopplungseinrichtung 37 kann beispielsweise ein Schneckengetriebe sein oder ein Schneckengetriebe aufweisen. Beim Ausführungsbeispiel hat die Kopplungseinrichtung 37 eine durch das Bedienelement 36 um seine Längsachse drehbare Schneckenwelle 38, die in Eingriff steht mit einem Schneckenrad 39, das um die Mittelachse A angeordnet und drehfest mit dem Spannrotor 29 verbunden ist. Das Schneckenrad 39 kann integraler bzw. monolithischer Bestandteil des Spannkörpers 29 sein. Beispielsgemäß erstreckt sich die Schneckenwelle 39 rechtwinklig und mit Abstand zur Mittelachse A. Eine Prinzipdarstellung der Drehvorrichtung 35 ist in Figur 6 schematisch gezeigt.

Vorzugsweise ist die Kopplungseinrichtung 37 (beispielsgemäß das Schneckengetriebe) ausreichend hemmend ausgebildet. Ohne Betätigung des Bedienelements 36 wird dadurch eine Relativdrehung des Spannrotors 29 relativ zum Grundkörper 12 bei den im Betrieb auftretenden Kräften, Drehmomenten und Vibrationen blockiert. Auf den Spannrotor bei bestimmungsgemäßem Gebrauch des Werkzeughalters 10 einwirkende Kräfte führen somit nicht zu einer Relativdrehung gegenüber dem Grundkörper 12. Eine solche Relativdrehung kann nur über die Drehvorrichtung 35 und beispielsgemäß das Bedienelement 36 erreicht werden.

Der Spannrotor 29 hat einen Rotorinnenraum 40, der den Spannrotor 29 beim Ausführungsbeispiel in Axialrichtung vollständig durchsetzt. Zumindest ist der Rotorinnenraum 40 von der der Zugangsöffnung 17 zugeordneten Seite des Spannrotors 29 zugänglich und zumindest an einer Stelle vom Spanngewinde 30 begrenzt.

Der Werkzeughalter 10 weist zur axialen Abstützung des Spannrotors 29 einen Lagerring 43 auf. Der Lagerring hat eine Ringaußenfläche 44, die der Mittelachse A abgewandt ist und eine Ringinnenfläche 45, die der Mittelachse A zugewandt ist. Die Ringaußenfläche 44 und die Ringinnenfläche 45 können sich in Axialrichtung betrachtet vollständig oder teilweise überlappen und sind bei einem Ausführungsbeispiel möglichst genau koaxial zueinander und möglichst genau koaxial zur Mittelachse A angeordnet. Die Erstreckungsrichtung der Ringaußenfläche 44 und der Ringinnenfläche 45 können in Axialrichtung betrachtet unterschiedlich groß sein, wobei die Axialerstreckung der Ringaußenfläche 44 kleiner sein kann als die Axialerstreckung der Ringinnenfläche 45. Die Ringaußenfläche 44 und die Ringinnenfläche 45 sind in Axialrichtung und in Umfangsrichtung betrachtet eben.

Der Außendurchmesser der Ringaußenfläche 44 und der Durchmesser der Umfangsinnenfläche 24 sind so gewählt, dass die Ringaußenfläche 44 und die Umfangsinnenfläche 24 ein erstes Passflächenpaar bilden. Der Durchmesser der Ringinnenfläche 45 und der Durchmesser der Rohraußenfläche 34 sind so gewählt, dass die Ringinnenfläche 45 und die Rohraußenfläche 34 ein zweites Passflächenpaar bilden.

Der Lagerring 43 kann in den Grundkörper 12 eingepresst sein. Das erste Passflächenpaar aus Ringaußenfläche 44 und Umfangsinnenfläche 24 bildet demnach eine spielfreie Presspassung. Zusätzlich kann auch das zweite Passflächenpaar aus Ringinnenfläche 45 und Rohraußenfläche 34 eine spielfreie Passung bilden.

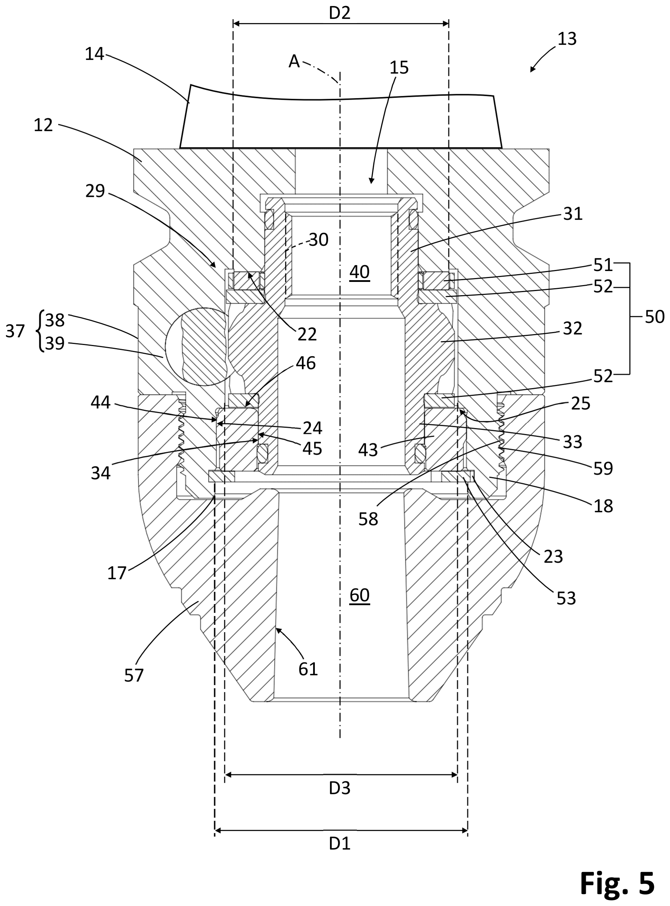

Wie es insbesondere in der Detaildarstellung in Figur 5 zu erkennen ist, ist der Lagerring 43 beispielsgemäß zwischen dem Rohrteil 18 des Grundkörpers 12 und dem Rohrabschnitt 33 des Spannrotors 29 angeordnet. Der Lagerring 43 liegt mit der Ringaußenfläche 44 flächig an der Umfangsinnenfläche 24 an und liegt mit seiner Ringinnenfläche 45 flächig an der Rohraußenfläche 34 an. Durch die beiden Passflächenpaare 44, 24 bzw. 45, 34 wird in Radialrichtung eine sehr genaue Anordnung des Rohrabschnitts 33 und damit des Spannrotors 29 relativ zur Mittelachse A erreicht.

Der Lagerring 43 ist gewindelos und wird beispielsgemäß ohne eine Gewindeverbindung im Aufnahmeraum 15 des Grundkörpers 12 angeordnet.

Am Lagerring 43 ist eine zweite Axiallagerfläche 46 vorhanden. Die zweite Axiallagerfläche 46 ist der ersten Axiallagerfläche 22 zugewandt. Beim Ausführungsbeispiel erstreckt sich die zweite Axiallagerfläche 46 in einer Ebene, die rechtwinklig zur Mittelachse A ausgerichtet ist. Die zweite Axiallagerfläche 46 kann durch eine Stirnfläche oder einen Stirnflächenabschnitt des Lagerrings 43 gebildet sein, der die Ringaußenfläche 44 mit der Ringinnenfläche 45 verbindet.

Der Spannrotor 29 ist in Axialrichtung zwischen der ersten Axiallagerfläche 22 des Grundkörpers 12 und der zweiten Axiallagerfläche 46 des Lagerrings 43 gehalten und gegen eine unerwünschte Bewegung in Axialrichtung gesichert. Dazu kann sich der Spannrotor 29 mittelbar oder unmittelbar an den Axiallagerflächen 22, 46 abstützen.

Bei dem veranschaulichten Ausführungsbeispiel weist der Werkzeughalter 10 zur Lagerung des Spannrotors 29 eine Axiallageranordnung 50 auf. Die Axiallageranordnung 50 hat beim Ausführungsbeispiel ein Wälzlager 51, das beispielsweise als Zylinderrollenlager oder Nadellager realisiert sein kann. Das Wälzlager 51 stützt sich beispielsgemäß unmittelbar an der ersten Axiallagerfläche 22 ab. Über einen Stützring 52 stützt sich der Spannrotor 29 und beispielsgemäß der zentrale Teil 32 am Wälzlager 51 ab. Beim Ausführungsbeispiel umschließen das Wälzlager 51 und der Stützring 52 das Endstück 31 des Spannrotors 29 in Umfangsrichtung um die Mittelachse A.

Die Axiallageranordnung 50 kann außerdem einen weiteren Stützring 52 aufweisen, mittels dem sich der Spannrotor 29 und beispielsgemäß der zentrale Teil 32 an der zweiten Axiallagerfläche 46 des Lagerrings 43 abstützt.

Durch den wenigstens einen optionalen Stützring 52 kann die Kontaktfläche und die Krafteinleitung zwischen dem zentralen Teil 32 des Spannrotors 29 und dem Wälzlager 51 und/oder der betreffenden Axiallagerfläche 22 bzw. 46 verbessert werden.

In Axialrichtung zur Zugangsöffnung 17 hin wird der Lagerring 43 beim Ausführungsbeispiel durch einen Nutenring 53 gehalten bzw. gesichert. Der Nutenring 53 kann beispielsweise ein Sprengring sein. Beim Ausführungsbeispiel hat der Nutenring 53 einen rechteckförmigen Ringquerschnitt und erstreckt sich in Umfangsrichtung um die Mittelachse A kreisbogenförmig. Zwei Ringenden 54 des Nutenrings 53 sind mit Abstand zueinander angeordnet, so dass der Nutenring 53 zwischen den Ringenden 54 eine Durchbrechung aufweist.

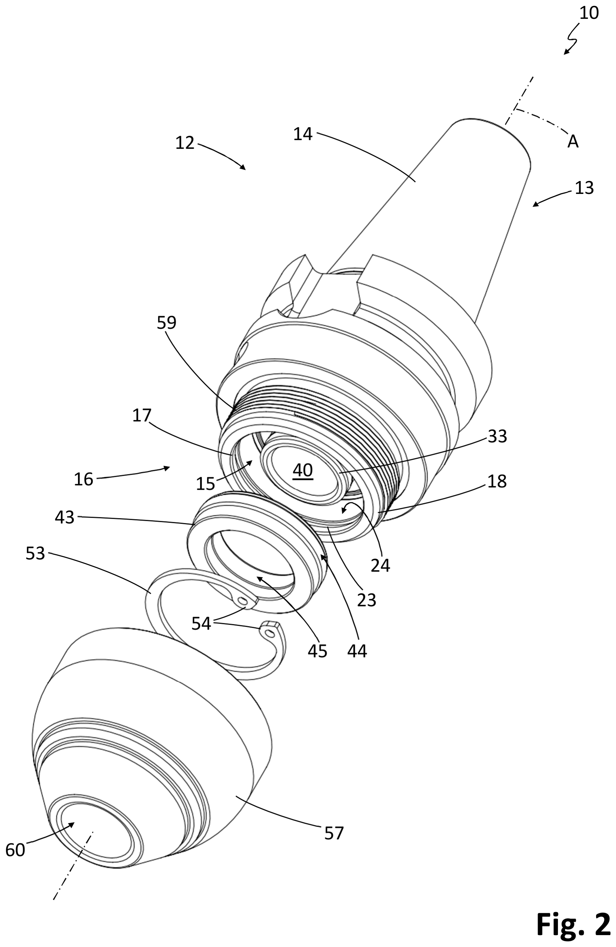

Der Nutenring 53 ist elastisch verformbar, so dass seine Ringenden 54 ausgehend von einer Ausgangslage (Figur 2) aufeinander zu bewegt werden können, um den Durchmesser des Nutenrings 53 aufgrund der elastischen Verformung zu verändern. Dabei kann der Außendurchmesser des Nutenrings 53 durch elastische Verformung reduziert werden, um ihn durch die Zugangsöffnung 17 in den Aufnahmeraum 15 hinein bewegen zu können und dort in die Sicherungsnut 23 einsetzen zu können.

In montiertem Zustand sind die Ringenden 54 innerhalb der Sicherungsnut 23 mit Abstand zueinander angeordnet. Der Nutenring 53 ist in montiertem Zustand elastisch verformt und wird dadurch gegen den Nutgrund der Sicherungsnut 23 gedrückt bzw. gepresst. Die Presskraft zwischen dem Nutenring 53 und dem Grundkörper 12 kann innerhalb der Sicherungsnut 23 so groß sein, dass bei den Kräften, die im bestimmungsgemäßen Gebrauch des Werkzeughalters 10 auftreten, eine Relativdrehung des Nutenrings 53 um die Mittelachse A relativ zum Grundkörper 12 verhindert ist.

Bei dem hier veranschaulichten Ausführungsbeispiel stützt sich der Lagerring 43 in Axialrichtung auf der dem Nutenring 53 entgegengesetzten Seite an der Ringstützfläche 25 des Grundkörpers 12 ab. Dadurch kann der Lagerring 43 in Axialrichtung zwischen der Ringstützfläche 25 und dem Nutenring 53 spielfrei bzw. fest gelagert werden, ohne eine zu große Axialkraft auf die Axiallageranordnung 50 bzw. den Spannrotor 29 zu übertragen.

Die beschriebene Anordnung ermöglicht es, den Grundkörper 12 in Axialrichtung kompakt bzw. kurz auszugestalten. Eine Gewindeverbindung zur Sicherung des Spannrotors 29 im Aufnahmeraum 15 kann entfallen. Durch die Passflächenpaarungen, die mit dem Lagerring 43 gebildet werden, ist eine sehr genaue Ausrichtung des Spannrotors 29 in Radialrichtung relativ zum Grundkörper 12 und somit relativ zur vom Grundkörper 12 definierten Mittelachse A möglich.

Der Werkzeughalter 10 hat beim veranschaulichten Ausführungsbeispiel ein Vorderteil 57. Das Vorderteil 57 ist dazu eingerichtet, zumindest im ersten Montageschritt lösbar am Grundkörper 12 und beispielsgemäß am Rohrteil 18 befestigt zu werden. Hierzu kann das Vorderteil 57 beispielsweise ein Innengewinde 58 aufweisen, das mit einem Außengewinde 59 des Grundkörpers 12 und insbesondere des Rohrteils 18 eine Gewindeverbindung herstellen kann. Alternativ zur Gewindeverbindung könnten auch andere formschlüssige und/oder kraftschlüssige Verbindungseinrichtungen verwendet werden. Zusätzlich oder alternativ zum Herstellen der lösbaren Verbindung kann das Vorderteil 57 stoffschlüssig bzw. durch eine Klebeverbindung am Grundkörper 12 und beispielsgemäß am Rohrteil 18 befestigt werden. Die Gewindeverbindung kann insbesondere zusätzlich verklebt werden.

Bei hergestellter Verbindung des Vorderteils 57 mit dem Grundkörper 12 ragt der Rohrteil 18 somit in das Vorderteil 57 hinein. Das Vorderteil 57 hat beispielsgemäß keine Halte- oder Sicherungsfunktion, um eine im Aufnahmeraum 15 des Grundkörpers 12 angeordnete Komponente (beispielsweise Spannrotor 29 oder Lagerring 43) in Axialrichtung abzustützen bzw. zu sichern. Das Vorderteil 57 dient insbesondere ausschließlich zur Erzeugung einer Spannkraft zum Einspannen des Werkzeugs 11 (wie es nachfolgend noch genauer erläutert wird).

Das Vorderteil 57 ist in Axialrichtung vollständig von einem Spannkanal 60 durchsetzt. Der Spannkanal 60 wird zumindest abschnittsweise durch eine Innenspannfläche 61 begrenzt. Die Innenspannfläche 61 ist konisch. Ihr Durchmesser nimmt ausgehend von einem dem Grundkörper 12 zugeordneten Ende des Spannkanals 60 zu einem entgegengesetzten vorderen Ende des Spannkanals 60 zu. Der Spannkanal 60 erweitert sich somit konisch nach vorne vom Grundkörper 12 weg. Der Spannkanal 60 ist zum Aufnahmeraum 15 hin offen.

Der Spannkanal 60 und der Rotorinnenraum 40 sind bei hergestellter Verbindung zwischen dem Vorderteil 57 und dem Grundkörper 12 fluchtend zueinander angeordnet. Der Spannkanal 60 kann nach dem Anbringen des Vorderteils 57 am Grundkörper 12 durch Schleifen oder ein anderes hochgenaues Verfahren bearbeitet werden, so dass der Spannkanal 60 möglichst genau koaxial zur Mittelachse A ausgerichtet ist.

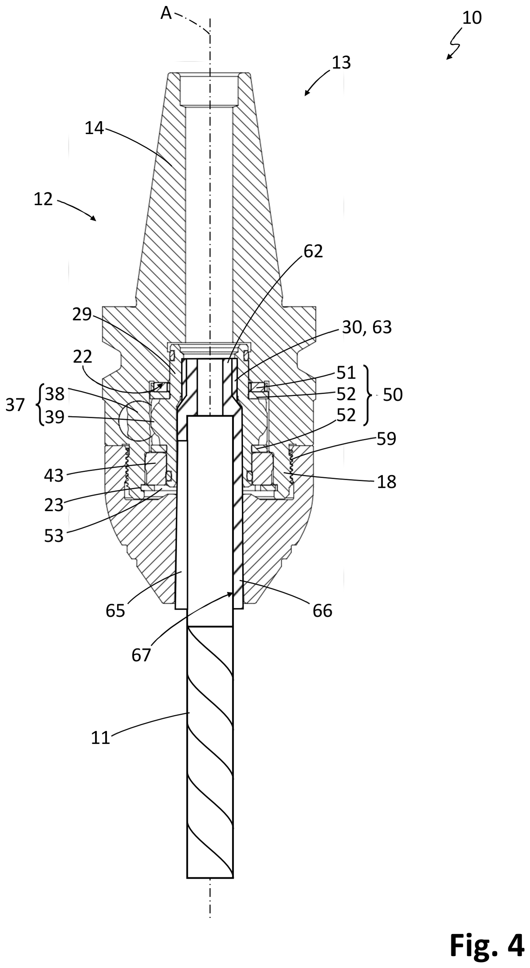

Zum Einspannen des Werkzeugs 11 in den Werkzeughalter 10 hat der Werkzeughalter 10 eine Spannzange 62. Die Spannzange 62 ist in den Figuren 4 und 6 schematisch dargestellt. Die Spannzange 62 hat ein Spannzangengewinde 63, das zur Herstellung einer Gewindeverbindung mit dem Spanngewinde 31 des Spannrotors 29 eingerichtet ist. Das Spannzangengewinde 63 kann an einem zylindrischen bzw. rohrförmigen Ende der Spannzange 62 angeordnet sein.

Im Anschluss an das dem Spannzangengewinde 63 entgegengesetzte Ende hat die Spannzange 62 eine konische Spannzangenaußenfläche 64. Die Spannzangenaußenfläche 64 ist dazu eingerichtet, mit der Innenspannfläche 61 zusammenzuarbeiten, um die Spannzange 62 zumindest in einem Axialabschnitt radial nach innen zu verformen. Zu diesem Zweck hat die Spannzange 62 einen und vorzugsweise mehrere sich in Axialrichtung erstreckende Schlitze 65. Die Schlitze 65 sind im Bereich der konischen Spannzangenaußenfläche 64 angeordnet, um fingerähnliche Spannelemente 66 in Umfangsrichtung um die Mittelachse A betrachtet voneinander zu trennen. Die Schlitze 65 erstrecken sich ausgehend von einem vorderen Ende der Spannzange 62 in die Spannzange 62 hinein, durchsetzen die Spannzange 62 in Axialrichtung aber nicht vollständig. Im Inneren hat die Spannzange 62 einen Spannzangeninnenraum 67, der auf der dem Spannzangengewinde 63 entgegengesetzten Seite von außen zugänglich ist, so dass ein Werkzeug 11 bzw. ein Werkzeugschaft des Werkzeugs 11 in den Spannzangeninnenraum 67 eingesteckt werden kann, und dort innerhalb der Spannelemente 66 angeordnet ist (Figur 4).

Zum Spannen eines Werkzeugs 11 mittels irgendeines Ausführungsbeispiels des Werkzeughalters 10 wird wie folgt vorgegangen:
Ein Werkzeugschaft eines Werkzeugs 11 wird in den Spannzangeninnenraum 67 eingesteckt. Die Spannzange 62 wird durch den Spannkanal 60 in den Rotorinnenraum 40 des Spannrotors 29 eingeführt, so dass das Spannzangengewinde 63 und das Spanngewinde 31 in Axialrichtung betrachtet einschraubbereit aneinander angelegt sind. Mittels der Drehvorrichtung 35 kann dann eine Relativdrehung des Spannrotors 29 gegenüber dem Grundkörper 12 erfolgen, wobei die Spannzange 62 in Axialrichtung weiter in den Spannkanal 60 und den Rotorinnenraum 40 hineingezogen wird. Dabei übt die Innenspannfläche 61 eine Radialkraft auf die Spannzangenaußenfläche 64 aus, wodurch die Spannelemente 66 radial nach innen gedrängt werden. Diese Bewegung wird durch das von den Schlitzen 65 bereitgestellte Spiel ermöglicht. Dadurch wird der im Spannzangeninnenraum 67 angeordnete Teil des Werkzeugs 11 (zum Beispiel Werkzeugschaft) mit einer Klemmkraft beaufschlagt und in der Spannzange 62 festgeklemmt. Die Spannzange 62 wiederum wird durch die Gewindeverbindung zwischen dem Spannzangengewinde 63 und dem Spanngewinde 61 im Werkzeughalter 10 gehalten.

Dadurch, dass die Drehvorrichtung 35 selbsthemmend ist, wird bei der Verwendung des Werkzeugs 11 (zum Beispiel bei der Bearbeitung eines Werkstücks) ein versehentliches Lösen des Werkzeugs 11 vom Werkzeughalter 10 vermieden. Das Werkzeug 11 kann über den Werkzeughalter 10 über die Maschinenspindel einer Maschine drehend um die Mittelachse A angetrieben werden, beispielsweise um ein Werkstück spanend zu bearbeiten. Das Werkzeug 11 kann zum Beispiel ein Fräser oder ein Bohrer sein.

Das Lösen eines Werkzeugs 11 kann wiederum durch Betätigen der Drehvorrichtung 35 erfolgen, um die Gewindeverbindung zwischen dem Spanngewinde 31 und dem Spannzangengewinde 63 zu lösen und die Spannzange 62 vom Grundkörper 12 abzunehmen.

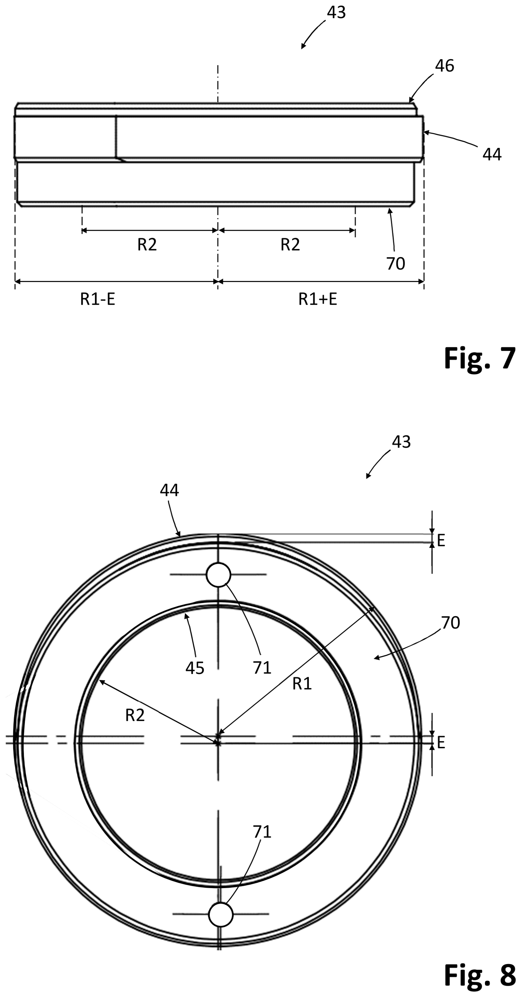

In den Figuren 7 und 8 ist ein abgewandeltes Ausführungsbeispiel eines Lagerrings 43 veranschaulicht. Bei diesem Lagerring 43 sind die Ringaußenfläche 44 und die Ringinnenfläche 45 nicht möglichst konzentrisch zueinander, sondern vielmehr um eine Exzentrizität E versetzt zueinander angeordnet.

Die Ringaußenfläche 44 hat einen Radius R1, während die Ringinnenfläche 45 einen Radius R2 aufweist. In einer von der zweiten Axiallagerfläche 46 abgewandten Stirnfläche 70 kann der Lagerring 43 mehrere und beispielsgemäß zwei Löcher 71 aufweisen, die insbesondere diametral gegenüberliegend an der Stelle der maximalen Exzentrizität E angeordnet sind. Die Löcher 71 können zum Einstecken eines Werkzeugs und zum Verdrehen des Lagerrings 43 relativ zum Grundkörper 12 dienen. Anstelle der Löcher 71 könnten an der Stirnfläche 70 auch andere Elemente vorhanden sein, an denen ein Werkzeug zum Verdrehen des Lagerrings 43 relativ zum Grundkörper 12 angreifen kann.

Wegen der exzentrischen Anordnung der Ringaußenfläche 44 relativ zur Ringinnenfläche 45 besteht die Möglichkeit, die Ringinnenfläche 45 möglichst koaxial um die Mittelachse A des Grundkörpers 12 auszurichten, wenn die Umfangsinnenfläche 24 außerhalb einer vorgegebenen Toleranz um die Mittelachse A angeordnet ist. Im Unterschied zu den vorstehend beschriebenen Ausführungsbeispielen wird somit bewusst eine Exzentrizität zwischen der Ringaußenfläche 44 und der Ringinnenfläche 45 am Lagerring 43 vorgesehen, so dass die Position der Ringinnenfläche 45 gegenüber der durch den Grundkörper 12 definierten Mittelachse A nach dem Anordnen des Lagerrings 43 im Aufnahmeraum 15 eingestellt werden kann. Abgesehen von der Exzentrizität E des Lagerrings 43 kann der Werkzeughalter 10 analog zu irgendeinem der vorstehend beschriebenen Ausführungsbeispiele aufgebaut sein und verwendet werden.

Die Erfindung betrifft einen Werkzeughalter 10 zum Spannen eines Werkzeugs 11 unter Verwendung einer Spannzange 62. Der Werkzeughalter 10 hat einen Grundkörper 12, aufweisend einen Maschinenverbindungsteil 14, der eine Schnittstelle zu einer Spindelaufnahme einer Maschinenspindel darstellt. Im Grundkörper 12 ist ein Aufnahmeraum 15 vorhanden, in dem ein Spannrotor 29 angeordnet ist. Der Spannrotor 29 ist zwischen einer ersten Axiallagerfläche 22 des Grundkörpers 12 und einer an einem Lagerring 43 vorhandenen zweiten Axiallagerfläche 46 in Axialrichtung parallel zu einer Mittelachse A des Grundkörpers 12 abgestützt. Der Lagerring 43 ist im Aufnahmeraum 15 mittels eines in eine Sicherungsnut 23 eingesetzten Nutenrings 53 gehalten. Der Lagerring 43 hat eine Ringaußenfläche 44 zur Anlage am Grundkörper 12 und eine Ringinnenfläche 45 zur Anlage am Spannrotor 29. Mittels des Lagerrings 43 kann der Spannrotor 29 in Radialrichtung sehr genau relativ zum Grundkörper 12 und damit sehr genau um die Mittelachse A des Grundkörpers 12 positioniert werden (geringe Abweichung von der idealen koaxialen Anordnung). Der Lagerring 43 ist insbesondere gewindelos und auch gewindelos am Grundkörper 12 gesichert.

### Bezugszeichenliste:

- 10: Werkzeughalter
- 11: Werkzeug
- 12: Grundkörper
- 13: Rückseite des Grundkörpers
- 14: Maschinenverbindungsteil
- 15: Aufnahmeraum
- 16: Vorderseite des Grundkörpers
- 17: Zugangsöffnung
- 18: Ringteil

- 22: erste Axiallagerfläche
- 23: Sicherungsnut
- 24: Umfangsinnenfläche
- 25: Ringstützfläche

- 29: Spannrotor
- 30: Spanngewinde
- 31: Endstück des Spannkörpers
- 32: zentraler Teil des Spannkörpers
- 33: Rohrabschnitt
- 34: Rohraußenfläche
- 35: Drehvorrichtung
- 36: Bedienelement
- 37: Kopplungseinrichtung
- 38: Schneckenwelle
- 39: Schneckenrad
- 40: Rotorinnenraum

- 43: Lagerring
- 44: Ringaußenfläche
- 45: Ringinnenfläche
- 46: zweite Axiallagerfläche

- 50: Axiallageranordnung
- 51: Wälzlager
- 52: Stützring
- 53: Nutenring
- 54: Ringenden

- 57: Vorderteil
- 58: Innengewinde
- 59: Außengewinde
- 60: Spannkanal
- 61: Innenspannfläche
- 62: Spannzange
- 63: Spannzangengewinde
- 64: Spannzangenaußenfläche
- 65: Schlitz
- 66: Spannelemente
- 67: Spannzangeninnenraum

- 70: Stirnfläche des Lagerrings
- 71: Loch

- A: Mittelachse
- D1: Durchmesser der Zugangsöffnung
- D2: Außendurchmesser der ersten Axiallagerfläche
- D3: Innendurchmesser der Ringstützfläche
- E: Exzentrizität
- R1: Radius der Ringaußenfläche
- R2: Radius der Ringinnenfläche

## Patentansprüche

1. Werkzeughalter (10) zum Spannen eines Werkzeugs (11), wobei der Werkzeughalter (10) aufweist:
- einen sich entlang einer Mittelachse (A) erstreckenden Grundkörper (12) aufweisend:
∘ einen Maschinenverbindungsteil (14), der zum Anordnen des Werkzeughalters (10) in einer Aufnahme einer Maschinenspindel eingerichtet ist,
∘ einen Aufnahmeraum (15), der an einer vom Maschinenverbindungsteil (14) abgewandten Vorderseite (16) eine Zugangsöffnung (17) aufweist,
∘ eine erste Axiallagerfläche (22), die angrenzend an den Aufnahmeraum (15) und mit Abstand zur Zugangsöffnung (17) angeordnet ist,
∘ eine Sicherungsnut (23), die zwischen der Zugangsöffnung (17) und der ersten Axiallagerfläche (22) angeordnet ist, und
∘ eine Umfangsinnenfläche (24), die zwischen der Sicherungsnut (23) und der ersten Axiallagerfläche (22) angeordnet ist,
- einen im Aufnahmeraum (15) Spannrotor (29) mit einem Spanngewinde (31), das dazu eingerichtet ist, eine Gewindeverbindung mit einem Spannzangengewinde (63) einer Spannzange (62) herzustellen, und mit einem sich um die Mittelachse (A) erstreckenden Rohrabschnitt (33),
- einen am Grundkörper (12) angeordneten Lagerring (43), der eine Ringaußenfläche (44) zur Anlage an der Umfangsinnenfläche (24), eine Ringinnenfläche (45) zur Anlage an einer Rohraußenfläche (34) des Rohrabschnitt (33) und eine zweite Axiallagerfläche (46) aufweist, die der ersten Axiallagerfläche (22) zugewandt ist, wobei sich der Spannrotor (29) mittelbar oder unmittelbar an der ersten Axiallagerfläche (22) und der zweiten Axiallagerfläche (46) abstützt,
- einen Nutenring (53), der in die Sicherungsnut (23 eingesetzt ist, und an dem sich der Lagerring (43) abstützt.

2. Werkzeughalter nach Anspruch 1, wobei die Umfangsinnenfläche (24) und die Ringaußenfläche (44) ein erstes Passflächenpaar und die Ringinnenfläche (45) und die Rohraußenfläche (34) ein zweites Passflächenpaar bilden.

3. Werkzeughalter nach Anspruch 1 oder 2, wobei der Lagerring (43) gewindelos ausgebildet ist.

4. Werkzeughalter nach einem der vorhergehenden Ansprüche, außerdem aufweisend eine am Grundkörper (12) angeordnete Drehvorrichtung (35), die mit dem Spannrotor (29) gekoppelt ist, um den Spannrotor (29) um die die Mittelachse (A) relativ zum Grundkörper (12) zu drehen.

5. Werkzeughalter nach einem der vorhergehenden Ansprüche, außerdem aufweisend eine Axiallageranordnung (50) die zur axialen Abstützung des Spannrotors (29) an der ersten Axiallagerfläche (22) und/oder der zweiten Axiallagerfläche (46) eingerichtet ist.

6. Werkzeughalter nach Anspruch 5, wobei die Axiallageranordnung (50) ein Wälzlager (51) aufweist, das zwischen der ersten Axiallagerfläche (22) und dem Spannrotor (29) angeordnet ist.

7. Werkzeughalter nach Anspruch 5 oder 6, wobei die Axiallageranordnung (50) einen Stützring (52) aufweist, der zwischen dem Spannrotor (29) und der ersten Axiallagerfläche (22) angeordnet ist.

8. Werkzeughalter nach einem der Ansprüche 3 bis 5, wobei die Axiallageranordnung (50) einen weiteren Stützring (52) aufweist, der zwischen dem Spannrotor (29) und der zweiten Axiallagerfläche (46) angeordnet ist.

9. Werkzeughalter nach einem der vorhergehenden Ansprüche, wobei der Grundkörper (12) angrenzend an den Aufnahmeraum (15) eine Ringstützfläche (25) aufweist, die der Zugangsöffnung (17) zugewandt ist und an der der Lagerring (43) abgestützt ist.

10. Werkzeughalter nach Anspruch 9, wobei ein Innendurchmesser der Ringstützfläche (25) mindestens so groß ist wie ein Außendurchmesser der ersten Axiallagerfläche (22).

11. Werkzeughalter nach einem der vorhergehenden Ansprüche, außerdem aufweisend ein Vorderteil (57), das einen von einer konischen Innenspannfläche (6) begrenzten Spannkanal (60) aufweist.

12. Werkzeughalter nach Anspruch 11, wobei das Vorderteil (57) und der Grundkörper (12) dazu eingerichtet sind, lösbar miteinander verbunden zu werden, insbesondere mittels einer Gewindeverbindung.

13. Werkzeughalter nach Anspruch 11 oder 12, wobei der Spannkanal (60) benachbart zur Zugangsöffnung (17) angeordnet ist.

14. Werkzeughalter nach einem der Ansprüche 11 bis 13, wobei bei hergestellter Gewindeverbindung zwischen dem Spanngewinde (31) und dem Spannzangengewinde (63) der Spannzange (62) eine Spannzangenaußenfläche (64) gegen die Innenspannfläche (61) des Vorderteils (57) gedrängt wird.
